# EUROPEAN PATENT APPLICATION

(11) **EP 1 962 536 A1**
(43) Date of publication of application: **27.08.2008**
(21) Application number: 08151762.5
(22) Date of filing: 21.02.2008
(51) Int. Cl.: H04Q 7/36

(54) **System and method for forming cell by using distributed antennas in WiMAX mobile communication system**

(30) Priority: 21.02.2007 KR 20070017442
(71) Applicant: Samsung Electronics Co., Ltd., Suwon-si Gyeonggi-do (KR)
(72) Inventor: Hwang, Seong-Taek, Gyeonggi-do (KR); Han, Shuangfeng, Gyeonggi-do (KR); Zhou, Chunhui, 100084, Beijing (CN); Wang, Jing, 100084, Beijing (CN); Zhao, Ming, 100084, Beijing (CN); Xu, Zheng, 100084, Beijing (CN)
(74) Representative: Grünecker, Kinkeldey, Stockmair & Schwanhäusser Anwaltssozietät

(57) **Abstract**

A system and a method for forming a cell by using distributed antennas in a World interoperability for Microwave Access (WiMAX) mobile communication system supporting a broadband wireless access communication system. A virtual cell is formed with a specific Mobile Station (MS) as a central part of the virtual cell by using distributed antennas, which improves the transmission capacity and the performance of an overall network system without changing the structure of a backbone network and the interface of the overall network system. The system includes, multiple MSs; distributed antennas for perform simultaneous communications with at least one MS among the multiple MSs, and for forming one virtual cell by communicating with the multiple MSs; and a Base Station (BS), which is typically connected to the distributed antennas through optical fibers, for communicating with the MSs.

## Description

The present invention relates to a broadband wireless communication system.. More particularly, the present invention relates to a system and a method that is suitable for forming a virtual cell in a World interoperability for Microwave Access (WiMAX) mobile communication system.

In general, the WiMAX mobile communication system is based on Institute of Electrical and Electronics Engineers (IEEE) 802.16e Wireless Metropolitan Area Network (WMAN) standards ensuring mobility of the mobile stations (MS), and supports Broadband Wireless Access (BWA). A network structure supported by the IEEE 802.16 standards operates in two schemes, which typically includes a mesh scheme and the PMP scheme.

In some nations and regions, the WiMAX mobile communication system having the PMP structure is being used for testing purposes, and/or for commercial purposes. The WiMAX mobile communication system is worthy of close attention for future needs due to the favorable aspects of the system to provide high-speed data communications, with a maximum communication range, and relatively cheap costs. However, WiMAX also has problems that are adversely affecting its implementation because of the high costs associated with the installation of hot zones, each of which functions as a wireless Local Area Network (LAN) base station (BS) for relaying radio waves so as to meet multiple MSs of users and their frequent movements. Accordingly, the installation of such hot zones has been limited to concentrating in populous areas that would provide access for a relatively number of users, such as a crowded downtown, or a university library.

Therefore, with respect to the hot zones, possible changes such as using Multiple Input Multiple Output (MIMO) or cell division technology can accelerate the growth of WiMAX.

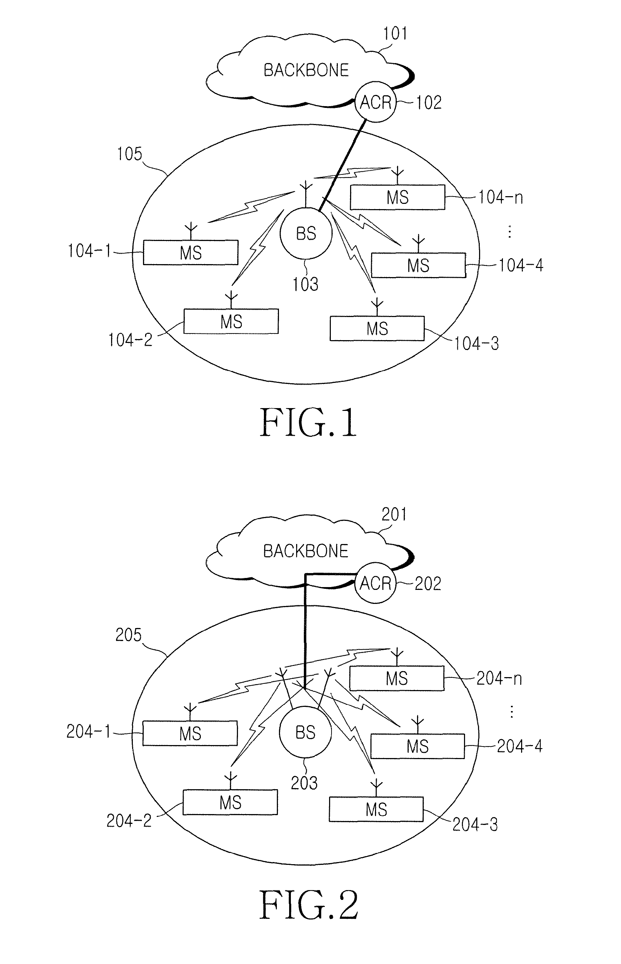

In relation to this technology, FIG. 1 is a view illustrating a conventional Single Input Single Output (SISO) system including a Base Station (BS) equipped with one antenna and multiple Mobile Stations (MSs), and FIG. 2 is a view illustrating an embodiment of a conventional MIMO system including a BS equipped with multiple antennas and multiple MSs each of which has one antenna. FIGs. 1 and 2 respectively show a backbone 101, 201, Access Control Router (ACR) 102,202, base station (BS) 103,203 and a plurality of MSs 104,204 within each cell/hot zone/transmission/area 105,205.

As illustrated in FIGs. 1 and 2, technology in which one or more antennas are not only established at a BS 103, but also one or more antennas are set up at a MS 104, has been previously proposed. The proposed technology improves the capacity of an overall network system, as well as transmission reliability, by using spatial diversity and spatial multiplexing.

However, while a MIMO scheme, (such as shown in FIG. 2) increases a data transfer rate and reduces errors theoretically in proportion to the number of antennas, drawbacks are raised in that the complexity of data transmission processing and consumption of channel resources also increases enormously, and due to near-far effect, the average capacity in a cell considerably varies according to a geographical position of a mobile communication MS.

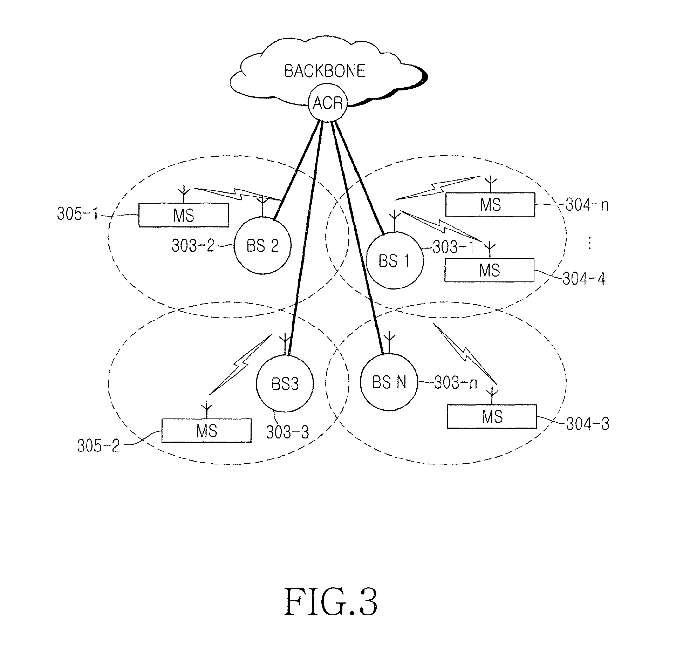

FIG. 3 is view illustrating a conventional cellular system in which a cell is divided into multiple subcells. As can be seen with regard to FIG. 3, the technology of reducing the control range of each cell with an increase in the number of cells through the technology of cell division causes the required transmission output of the BSs to be reduced, and the capacity of an overall network system appears to increase because of the decrease of average access distance.

However, with regard to FIG. 3, as the sizes of cells or microcells become smaller due to the cell division process, there can actually be a reduction in capacity of an overall network system caused by a side effect of co-channel interference. Moreover, the increasing number of BSes and frequent handover operations increase system costs and a control load of an upper layer.

Accordingly, the present invention has been made in part to solve at least some of the above-stated problems occurring in the prior art. It is the object of the present invention to provide a system and a method for forming a cell by using distributed antennas in a WiMAX mobile communication system, which can improve the transmission capacity and the performance of an overall network system without changing the structure of a backbone network and the interface.

This object is solved by the subject matter of the independent claims.

Preferred embodiments are defined in the dependent claims.

In accordance with an exemplary aspect of the present invention, there is provided a system for forming a cell by using distributed antennas in a World interoperability for Microwave Access (WiMAX) mobile communication system supporting broadband wireless access according to an embodiment of the present invention, which includes: multiple Mobile Stations (MSs); distributed antennas for performing simultaneous communications with at least one among the multiple MSs, and for forming one virtual cell by communicating with the multiple MSs; and a Base Station (BS), connected to the distributed antennas through optical fibers for communicating with the MSs.

In accordance with another exemplary aspect of the present invention, there is provided a method for forming a cell by using distributed antennas in a World interoperability for Microwave Access (WiMAX) mobile communication system supporting broadband wireless access communication system according to another embodiment of the present invention, including the steps of: making a search, by a Mobile Station (MS), for one or more distributed antennas satisfying the preset service quality in the same cell including one Base Station (BS); selecting one or more distributed antennas satisfying the service quality according to a result of the search; forming a virtual cell with the selected one or more distributed antennas; and accessing a BS located in a cell including the formed virtual cell to one or more distributed antennas located in the virtual cell, and performing communications therebetween.

The above object and other exemplary features, aspects, and advantages of the present invention will become more apparent from the following detailed description taken in conjunction with the accompanying drawings, in which:
FIG. 1 is a view illustrating a conventional SISO system including a BS equipped with one antenna and multiple MSs;
FIG. 2 is a view illustrating a conventional MIMO system including a BS equipped with multiple antennas and multiple MSs each of which has one antenna;
FIG. 3 is a view illustrating a conventional cellular system in which a cell is divided into multiple subcells;
FIG. 4 is a view illustrating a system for forming a virtual cell based on distributed antennas according to an exemplary embodiment of the present invention;
FIG. 5 is a view illustrating a virtual cell in a Distributed Wireless Communication System (DWCS) according to an exemplary embodiment of the present invention; and
FIG. 6 is a flowchart illustrating an example of the operation of a system for forming a virtual cell based on distributed antennas according to the present invention.

Hereinafter, exemplary embodiments of the present invention will be described in detail with reference to the accompanying drawings. It is to be understood that the present invention is not limited to the examples shown and described herein. The following description includes particulars, such as specific configuration elements, which are only presented in support of more comprehensive understanding of the present invention, and it will be obvious to those skilled in the art that prescribed changes in form and various modifications may be made to the particulars which does not depart from the spirit of the invention and the scope of the appended claims.

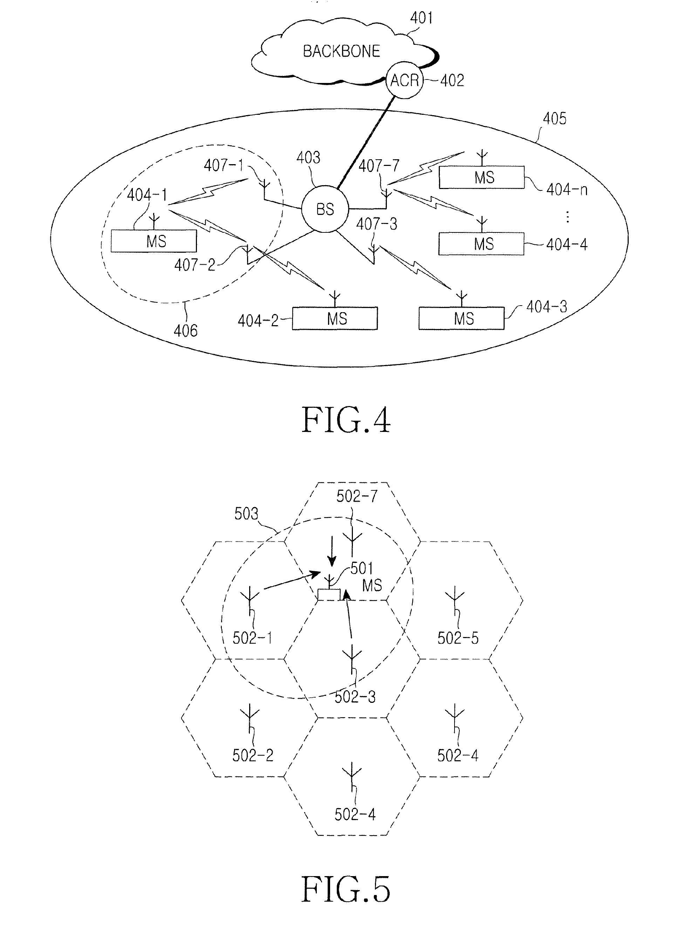

FIG. 4 illustrates an exemplary configuration of system for forming a virtual cell by using distributed antennas in a WiMAX mobile communication system according to the present invention. Referring to FIG. 4, a WiMAX mobile communication system related to an exemplary embodiment of the present invention includes a cell 405 having one or more distributed antennas 407-1 to n, a BS 403, multiple user MSs 404-1 to n, an Access Control Router (ACR) 402, and a backbone 401. Herein, the one or more distributed antennas 407-1 to n may communicate with at least one among the multiple user MSs 404-1 to n. The BS 403 is typically connected to the one or more distributed antennas 407 through optical fibers, and communicates with the multiple MSs 404. Each of the multiple user MSs 404 communicates with the BS via the distributed antennas, and describes the range of one cell. QUESTION: What is meant by describes the range of one cell?

Still referring to FIG. 4, the ACR 402 controls the BS 403. The backbone 401 receives data transmitted from the ACR 402, and performs a connection with another network.

More particularly, each of the MSs 404 performs communication with the BS 403 in order to gain access to a network system according to a request for a call connection and a channel condition in its located position. At this time, each of the MSs 404 can select one or more distributed antennas to which each of the MSs 404 can communicate while still satisfying optimal power and quality requirements (i.e., the service quality) of a signal in the range within the same cell where each MS is located, in order to receive communication services offered from the BS 403, or for a call connection with another MS. Also, the distributed antennas 407 equipped with a transceiver for performing conversion between a Radio Frequency (RF) signal and a digital Intermediate Frequency (IF) signal correspond to one or more distributed antennas located in the range where the distributed antennas 407 can communicate with the base station 403 for performing a transmitted digital IF signal processing.

Thus, the multiple MSs 404 communicate with one or more distributed antennas 407 belonging to the same BS, and the multiple distributed antennas 407 are connected to the BS 403, which in turn forms a cell corresponding to the range over which one BS can control.

Each of the multiple MSs 404 can search for and select one or more distributed antennas 407 so as to communicate with the BS 403 in its located place, and a point of reference on which the multiple MS 404 search for and select one or more distributed antennas 407 distributed over many places signifies one or more distributed antennas through which the multiple MSs 404 can perform communications at more than a preset received signal level.

Still referring to FIG. 4, according to an example of the present invention, at this time, within one cell 405 formed with the multiple MSs 404 and one or more distributed antennas 407 selected by the multiple MSs 404 as the central part of the cell, another virtual cell 406 is formed. Here, the virtual cell 406 is temporarily formed with a specific MS as the central part of the virtual cell 406 during only a time interval for which the specific MS communicates with the one or more distributed antennas 407 satisfying the service quality of the specific MS in a place where the specific MS is located. Then, even if the position of the specific MS changes, the specific MS searches for and selects one or more distributed antennas 407 satisfying the service quality in a place where the specific MS itself is located, and communicates with one or more distributed antennas 407. Herein, while performing the communications, at least another virtual cell can be formed.

According to an exemplary aspect of the present invention, the virtual cell 406 is always generated and ceases to exist in a place where each of the multiple MSs is located regardless of the movement of each of the multiple MSs. It causes, as illustrated in FIG. 5, a virtual cell to be formed with the specific MS as the central part of the virtual cell, and because the distributed antennas 502 can simultaneously communicate with one MS or multiple MSs adjacent to their area where the distributed antennas 502 can transmit/receive data, the distributed antennas 502 can be included in one or more virtual cells. Namely, each of the multiple MSs existing within the same cell forms a virtual cell for itself, and the virtual cell changes as the MS moves. Also, the BS 403 includes one or more virtual cells according to the number of MSs existing in the range of controllable cells. Furthermore, because the virtual cell exists within the same cell, and because a virtual cell is continuously produced in a current position as long as the MS communicates with the BS via the distributed antennas even if a position of the MA changes, a process of handover with usual meanings due to the movement between cells of the MS is not considered.

In addition, according to the present invention, the average access distance of a transmission output that the MS outputs for communications with the distributed antennas is reduced as the distributed antennas are set up in many distributed places, thereby more efficiently utilizing the electric power of the MS.

Moreover, in protocol layers of a WiMAX system according to the present invention, data processing is performed based on two layers, i.e. a physical layer and Media Access Control (MAC), included in a lower layer of an Open Systems Interconnection (OSI) standard reference model widely known in general in a communication system, and because a scheme of Orthogonal Frequency Division Multiple Access (OFDMA), duplexing technique, and the function of packet encapsulation also are not varied by the present invention. Therefore, a more detailed description of same will be omitted.

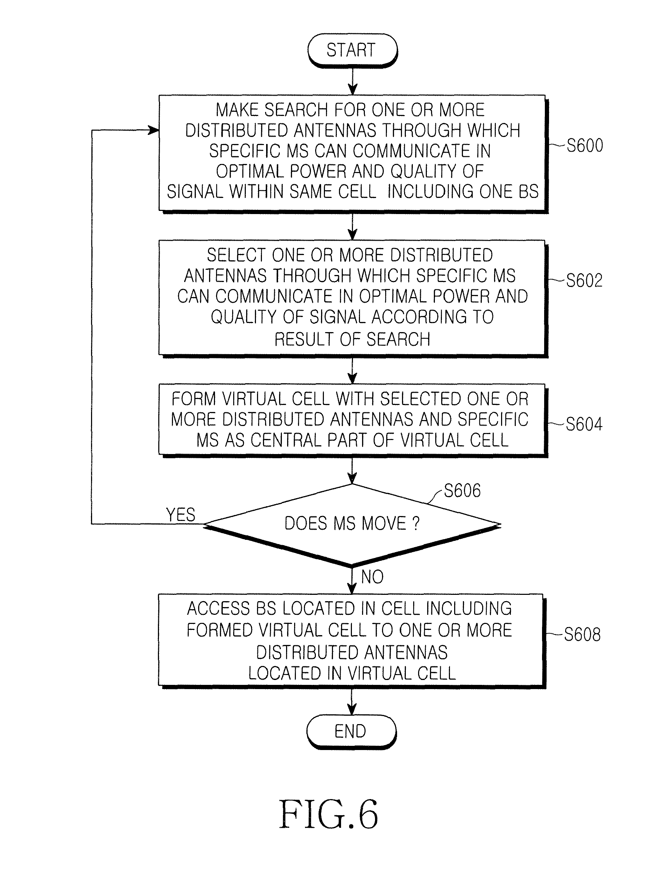

FIG. 6 is a flowchart illustrating an example of a method for forming a virtual cell by using one or more distributed antennas in a WiMAX mobile communication system according to the present invention.

First, in step S600, in order to gain access to a network system when a user requests a user MS to connect a call, or according to channel conditions, the user MS makes a search for one or more distributed antennas through which the user MS can communicate in a preset service quality within the same cell including one BS.

After the search, the user MS selects, in step S602, one or more distributed antennas through which a specific user MS can communicate in a preset service quality according to a result of the search.

Next, in step S604, a virtual cell is formed with the selected one or more distributed antennas and the specific user MS as the central part of the virtual cell. Herein, the virtual cell corresponds to one or more cells included in a single cell including the BS and multiple MSs located in the range over which communication control can be implemented.

In step 606, a BS located in a cell including the virtual cell formed in step 604 gains access to one or more distributed antennas located in the virtual cell, and performs communications via the one or more distributed antennas.

In step 608 if the MS has moved, the method reverts back to step S600 and makes another search, so as to ensure the quality of service does not change as the user MS changes location.

Comment/question: The decision box above (changed to step S608) indicates a determination is made as to whether the specific MS has moved, and if so, another search is made. Which component makes that determination, for example, the BS within the original cell? Is the determination based on, for example, signal strength received by the various antennas?

The merits and effects of exemplary embodiments, as disclosed in the present invention, and as so configured to operate as shown above, will be described as follows.

As previously described, according to the present invention, by proposing a virtual cell based on the distributed antennas with a specific MS as the central part of the virtual cell, stable communications are performed without handover between the antennas belonging to the same BS, and a space possessed by antennas is not only small in an overall network system but also it can increase communication capacity and a data transfer rate. In addition, since an average access distance between a user MS and an antenna becomes shorter, transmission output power of the user MS is reduced.

While the invention has been shown and described with reference to certain exemplary embodiments thereof, it will be understood by those skilled in the art that various changes in form and details may be made therein without departing from the scope of the appended claims.

## Claims

1. A system for forming a cell by using distributed antennas in a World interoperability for Microwave Access, WiMAX, mobile communication system supporting broadband wireless access, the system comprising:
a plurality of mobile stations;
distributed antennas for performing simultaneous communications with at least one mobile station among the plurality of mobile stations, and for forming one virtual cell by communicating with said at least one mobile station among the plurality of mobile stations; and
a base station, connected to the distributed antennas for communicating with at least said one mobile station of the plurality of mobile stations.

2. The system according to claim 1, wherein the base station is connected to the distributed antennas by optical fibers.

3. The system according to claim 1 or 2, where the plurality of mobile stations are located with a cell, and a virtual cell comprises an area within the cell.

4. The system according to one of claims 1 to 3, wherein the number of virtual cells corresponds to the number of mobile stations of said plurality of mobile stations.

5. The system according to one of claims 1 to 4, wherein each mobile station of the plurality of mobile stations communicates with one or more distributed antennas with a signal power greater than a preset reference value.

6. The system according to claim 5, wherein each mobile station of the plurality of mobile stations communicates with one or more distributed antennas according to a preset service quality.

7. The system according to one of claims 1 to 4, wherein each mobile station of the plurality of mobile stations communicates with one or more distributed antennas according to a preset service quality.

8. The system according to one of claims 1 to 7, wherein the distributed antennas comprise a transceiver for performing conversion between an RF signal and a digital IF signal.

9. The system according to one of claims 1 to 8, wherein the base station performs signal processing of a transmitted digital Intermediate Frequency (IF) signal.

10. The system according to claim 1 or 4, wherein the number of distributed antennas and positions thereof are adjusted according to the number of mobile stations of users within the cell and channel conditions.

11. The system according to one of claims 1 to 10, wherein the WiMAX mobile communication system is based on the IEEE 802.16e Wireless Metropolitan Area Network, WMAN, standards.

12. The system according to one of claims 1 to 10, wherein the WiMAX mobile communication system corresponds to a scheme of Point-to-MultiPoint, PMP.

13. The system according to claim 4, wherein the virtual cell is formed with a specific mobile station as a central part of the virtual cell.

14. A method for forming a cell by using distributed antennas in a World interoperability for Microwave Access, WiMAX, mobile communication system supporting broadband wireless access communication system, the method comprising the steps of:
making a search, by a mobile station, for one or more distributed antennas satisfying a preset service quality in the same cell including one base station;
selecting one or more distributed antennas satisfying the service quality according to a result of the search;
forming a virtual cell with the selected one or more distributed antennas; and
accessing a base station located in a cell including the formed virtual cell by one or more distributed antennas located in the virtual cell, and performing communications therebetween.

15. The method according to claim 14, wherein a number of distributed antennas and positions thereof are adjusted according to a number of mobile stations within the cell.

16. The method according to claim 15, wherein the step in which the number of distributed antennas and positions thereof are adjusted is also based on the channel conditions.

17. The method according to claim 14, wherein the virtual cell is formed with a specific mobile station as a central part of the virtual cell.

18. The method according to claim 14, wherein the broadband wireless access communication system is based on IEEE 802.16e Wireless Metropolitan Area Network, WMAN, standards.
